# FASCICULE DE BREVET EUROPEEN

(11) **EP 0 626 290 B1**
(45) Date de publication et mention de la délivrance du brevet: **22.07.1998**
(21) Numéro de dépôt: 94401052.9
(22) Date de dépôt: 11.05.1994
(51) Int. Cl.: B60N 2/36

(54) **Siège escamotable pour véhicule automobile**
Klappsitz für Kraftfahrzeug
Collapsible seat for motor vehicle

(30) Priorité: 25.05.1993 FR 9306197
(43) Date de publication de la demande: 30.11.1994
(73) Titulaire: RENAULT, 92109 Boulogne-Billancourt (FR)
(72) Inventeur: Bisserier, Philippe, F-78450 Villepreux (FR); Riou, Jean-Christophe, F-92120 Montrouge (FR)
(74) Mandataire: Ernst-Schonberg, Michel

(56) Documents cités:
- EP-A- 0 030 924
- EP-A- 0 422 527
- DE-A- 4 136 363
- FR-A- 1 537 965
- FR-A- 2 577 860
- GB-A- 628 078
- US-A- 4 805 953

## Description

L'invention concerne un siège escamotable pour véhicules automobiles du type comportant un support de siège, une assise relevable et un dossier basculant vers l'avant à partir de sa position d'utilisation conforme au préambule de la revendication.

La publication US-A-4805953 décrit un siège escamotable porté par des paliers rigidement fixés au plancher du véhicule incluant une assise et un dossier basculant portant à sa base une bielle de commande de relevage et d'abaissement de l'assise.

La publication FR-A-1537965 décrit un siège escamotable dans lequel l'assise est relevable autour d'un axe porté par le plancher du véhicule. La base du dossier basculant porte ici l'axe de pivotement d'un élément de manoeuvre à genouillère destiné au déverrouillage et déplacement initial du dossier avant relevage de l'assise du siège.

Les publications FR-A-2377901 et FR-A-2053861 décrivent un siège constitué par une assise et un dossier basculables autour d'axes de pivotement distincts situés respectivement à l'avant de l'assise et à la base du dossier. L'assise et le dossier de ces sièges doivent être montés individuellement dans l'habitacle et nécessitent l'emploi de ferrures de positionnement rigidement reliées au plancher du véhicule.

L'invention a pour objet un siège solidaire d'un support de montage dont les flancs latéraux portent un axe de pivotement des pieds de soutien de la partie antérieure de l'assise, un axe de pivotement d'une bielle support latérale articulée à la base du dossier et un axe de rotation d'une béquille latérale de soutien dudit dossier.

L'invention concerne plus particulièrement un siège placé à côté du siège du conducteur, susceptible d'occuper une position de rangement dans le but de prolonger le plancher de chargement du véhicule.

Ce but est atteint conformément à la caractéristique de la revendication indépendante.

Selon une autre caractéristique de l'invention, chaque bielle-support possède une zone d'appui de l'assise et le moyen de retenue d'un verrou de blocage de la position relative de la bielle et de la béquille, et cette dernière porte un organe de manoeuvre dudit verrou, dans le sens d'un déblocage de la position d'utilisation du dossier, dans le but de permettre son basculement vers l'avant.

Le siège ainsi réalisé possède un dossier basculant, susceptible d'occuper une position de rangement améliorée.

D'autres caractéristiques et avantages de l'invention apparaîtront à la lecture de la description d'un exemple de réalisation du siège faite en référence du dessin annexé dans lequel :
- la figure 1 est une représentation schématique du siège en position d'utilisation disposé dans l'habitacle d'un véhicule,
- la figure 2 est une représentation du siège de la figure 1 en position de rangement,
- la figure 3 est une représentation de l'assise et du dossier du siège dans une position transitoire.
- les figures 4 et 5 représentent à une plus grande échelle le mécanisme de verrouillage du dossier du siège en référence des positions conformes aux figures 1 et 2.

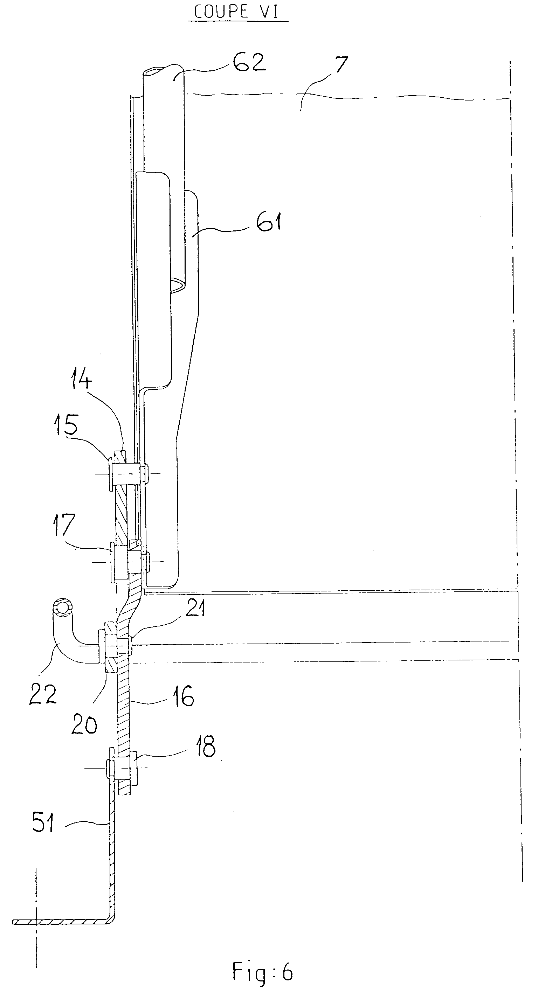

- la figure 6 est une vue en coupe du mécanisme selon la ligne VI-VI de la figure 4.

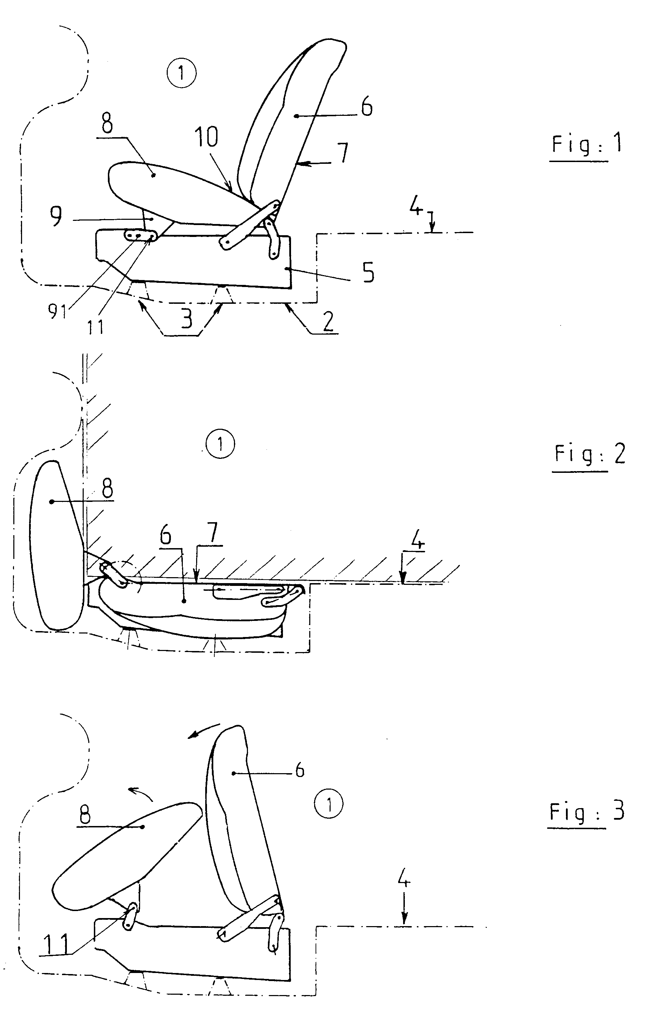

On a représenté partiellement aux figures 1 à 3, une partie de l'habitacle 1 d'un véhicule comportant une paroi de plancher 2 à traverses 3 derrière laquelle est localisée une surface de chargement 4. La paroi de plancher porte le support d'un siège escamotable 10, configuré en un bac de réception 5 du dossier basculant 6. Le panneau d'habillage 7 de la face arrière du dossier 6 constitue le couvercle de fermeture du bac 5 lorsque le dossier 6 occupe la position de rangement illustrée par la figure 2.

La partie antérieure de l'assise relevable 8 porte des pieds de soutien 9 respectivement articulés autour d'un axe de pivotement 11 porté par une bielle 91 articulée sur le bac 5. Dans le but de permettre le relèvement de l'assise tel qu'illustré à la figure 2, on prévoit avantageusement sur le bac-support de réception 5, une ouverture de passage des pieds 9.

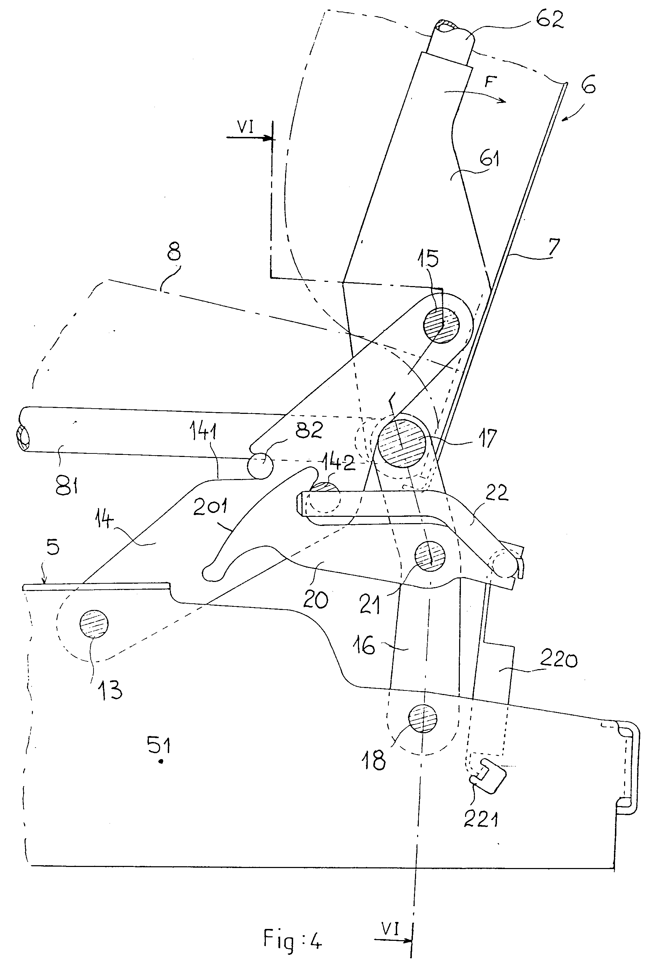

Le mécanisme de verrouillage du dossier 6 est représenté dans sa position d'utilisation à la figure 4. Le mécanisme est agencé latéralement à l'armature tubulaire 81 de l'assise 8 et du flasque 61 de soutien du montant 62 de l'armature du dossier 6.

Chaque flanc latéral tel que 51 du bac-support 5 porte l'axe de pivotement 13 d'une bielle support latérale 14 articulée sur le flasque 61 à la base du dossier 6, autour d'un axe de pivotement 15.

Une béquille de soutien 16 du dossier 6 est portée par un premier axe 17 fixé à la base du dossier 6 sur le flasque 61.

Selon une caractéristique du mécanisme, l'axe 17 est parallèle à l'axe 15 de pivotement de la bielle support 14 et s'étend transversalement entre ledit axe de pivotement 15 et un deuxième axe de rotation 18 de la béquille de soutien 16 porté par le flanc 51 du bac-support 5.

Selon une autre caractéristique du mécanisme, chaque bielle support 14 possède une zone d'appui 141 de l'armature 81 de l'assise 8. A cet effet, l'armature 81 porte une traverse tubulaire 82 en appui sur la bielle support 14.

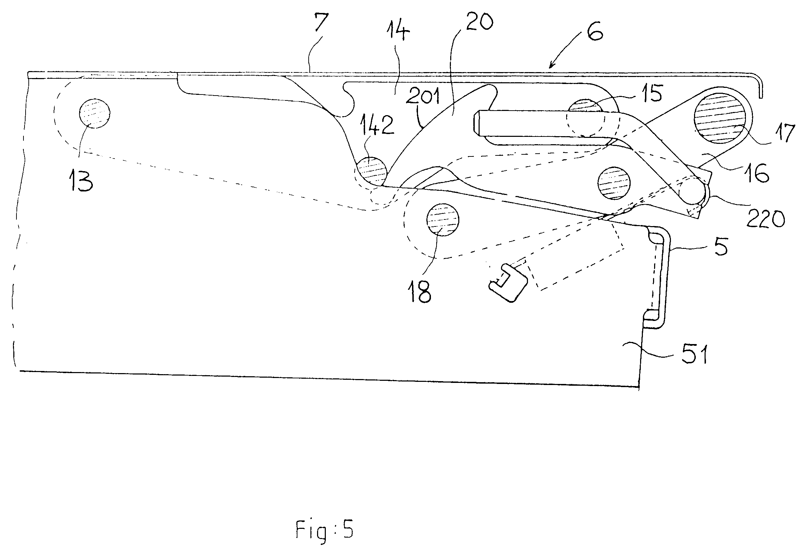

Pour éviter le basculement non désiré du dossier 6 dans le sens de la flèche F, la bielle support 14 porte l'axe de retenue 142 d'un verrou 20. Le verrou 20 est monté à rotation autour d'un axe 21 porté par la béquille 16 sous l'action d'un levier de manoeuvre 22. Un ressort 220 monté en tension entre le levier 22 et l'ancrage 221 porté par la paroi 51 assure le rappel du verrou 20 dans sa position de verrouillage. Le verrou 20 porte par ailleurs un profil de came 201 qui favorise les déplacements relatifs du verrou 20 par rapport à l'axe de retenue 142. Le déplacement du verrou 20 sous l'action du ressort 220 dans la position de rangement du dossier représentée à la figure 5 est de ce fait empêché.

Le fonctionnement du mécanisme est décrit ci-après en référence de la figure 4 dans laquelle le verrou 20 est en position de retenue de l'axe 142.

Ainsi que cela est montré à la figure 4, la béquille 16 est en appui par son axe 17 sur la bielle support 14. Le flasque 61 du dossier 6 est immobilisé par rapport au bac-support 5 sous l'effet de l'interverrouillage des axes 15, 17, 18 avec l'axe de retenue 142 quelque soit le sens de manipulation du dossier.

La manoeuvre du levier 22 assure le déverrouillage de l'axe 142. La poussée exercée sur le dossier dans le sens de la flèche F ne permet pas de modifier la position relative des axes 15, 17, 18. Le dossier 6 est ainsi empêché de basculer vers l'arrière.

Par contre, lorsque l'on souhaite basculer le dossier 6 vers l'avant, on procède préalablement au relevage de l'assise 8. Le basculement du dossier 6 engendre une modification de la position relative des axes 15, 17, 18.

Au cours du basculement du dossier 6, vers l'avant, la béquille 16 pivote autour de l'axe 18.

La rotation du dossier autour de l'axe 15 à pour effet de reculer l'axe 17 et d'incliner la béquille 16 vers l'arrière comme représenté à la figure 5.

La bielle support 14 se déplace simultanément autour de l'axe 13 pour occuper une position sensiblement horizontale, tandisque le dossier 6 atteint sa position de rangement dans le bac-support 5.

## Revendications

1. Siège escamotable pour véhicules automobiles du type comportant un support de siège (5), un dossier basculant (6) vers l'avant à partir de sa position d'utilisation, une assise (8) relevable et dans lequel les flancs latéraux (51) du support (5) fixé sur une paroi (2) du véhicule portent l'axe de pivotement (11) relié aux pieds de soutien (9) de la partie antérieure de l'assise (8), l'axe de pivotement (13) d'une bielle support latérale (14) articulée à la base du dossier (6) et l'axe de rotation d'une béquille (16) latérale de soutien dudit dossier, caractérisé par le fait que chaque béquille de soutien (16) est portée par un premier axe (17) fixé à la base du dossier, et disposé parallèlement à l'axe (15) de pivotement de ladite bielle support (14) latérale et que ledit premier axe (17) s'étend transversalement entre ledit axe de pivotement (15) et un deuxième axe de rotation (18) de la béquille de soutien (16) porté par le support (5) du siège.

2. Siège selon la revendication 1, caractérisé par le fait que le support du siège est configuré en un bac de réception du dossier (6) muni d'un couvercle de fermeture constitué par un panneau d'habillage (7) de la face arrière du dossier.

3. Siège selon la revendication 1, caractérisé par le fait que chaque bielle support (14) possède une zone d'appui (141) de l'assise (8) et le moyen de retenue (142) d'un verrou (20) de blocage de la position relative de la bielle et de la béquille (16) et que ladite béquille (16) porte un organe de manoeuvre (22) dudit verrou (20) dans le sens d'un déblocage de ladite position dans le but de permettre le basculement vers l'avant du dossier du siège.

4. Siège selon la revendication 2, caractérisé par le fait que le support (5) de réception du dossier (6) du siège possède une ouverture de passage des pieds de soutien (9) de la partie antérieure de l'assise (8).

## Claims

1. A retractable seat for motor vehicles, of the type comprising a seat support (5), a back portion (6) which tips forwardly from its position of use, a seat portion (8) which can be raised, wherein the side flanks (51) of the support (5) which is fixed on a wall portion (2) of the vehicle carry the pivot axis (11) which is connected to the support legs (9) of the front part of the seat portion (8), the pivot axis (13) of a lateral support strut (14) which is pivotally connected to the base of the back portion (6), and the axis of rotation of a lateral supporting leg member (16) for supporting said back portion, characterised in that each supporting leg member (16) is carried by a first axis (17) which is fixed to the base of the back portion and which is disposed parallel to the axis (15) of pivotal movement of said lateral support strut (14), and that said first axis (17) extends transversely between said pivot axis (15) and a second axis (18) for rotation of the supporting leg member (16), the second axis being carried by the support (5) of the seat.

2. A seat according to claim 1 characterised in that the support of the seat is in the form of a box structure for receiving the back portion (6), provided with a closure cover formed by a trim panel (7) on the rear face of the back portion.

3. A seat according to claim 1 characterised in that each support strut (14) has a zone (141) for supporting the seat portion (8) and the retaining means (142) for retaining a locking member (20) for blocking the relative position of the support strut and the leg member (16), and that said leg member (16) carries an actuating member (22) for actuating said locking member (20) in the direction of unblocking of said position, in order to permit forward tipping movement of the back portion of the seat.

4. A seat according to claim 2 characterised in that the support (5) for receiving the back portion (6) of the seat has an opening for the passage therethrough of the support legs (9) of the front part of the seat portion (8).

## Patentansprüche

1. Klappsitz für Kraftfahrzeuge, mit einem Sitzbock (5), einer aus ihrer Verwendungsposition nach vorn klappbaren Rückenlehne (6) und einer hochklappbaren Sitzfläche (8), bei dem die Seitenwände (51) des auf einer Wand (2) des Fahrzeugs befestigten Bocks (5) die Schwenkachse (11), die mit den Stützfüßen (9) des vorderen Teils der Sitzfläche (8) verbunden ist, die Schwenkachse (13) einer seitlichen Stützstange (14), die an der Basis der Rückenlehne (6) angelenkt ist, und die Drehachse eines seitlichen Stützbeines (16) der Rückenlehne tragen, dadurch gekennzeichnet, daß jedes Stützbein (16) von einer ersten Achse (17) getragen wird, die an der Basis der Rückenlehne befestigt ist und parallel zur Schwenkachse (15) der seitlichen Stützstange (14) angeordnet ist, und daß sich diese erste Achse (17) der zwischen der Schwenkachse (15) und einer zweiten Drehachse (18) des Stützbeines (16) erstreckt, die von dem Bock (5) des Sitzes getragen wird.

2. Sitz nach Anspruch 1, dadurch gekennzeichnet, daß der Bock des Sitzes als ein Aufnahmekasten für die Rückenlehne (6) gestaltet ist, der mit einem Verschlußdeckel versehen ist, welcher von einer Verkleidungsplatte (7) der Rückseite der Rückenlehne gebildet wird.

3. Sitz nach Anspruch 1, dadurch gekennzeichnet, daß jede Stützstange (14) eine Auflagezone (141) für die Sitzfläche (8) und das Haltemittel (142) für einen Riegel (20) zur Blockierung der relativen Position der Stange und des Stützbeines (16) besitzt und daß dieses Stützbein (16) ein Organ zur Betätigung (22) des Riegels (20) in der Richtung einer Entriegelung dieser Position trägt, um das Umklappen der Rückenlehne des Sitzes nach vorne zu ermöglichen.

4. Sitz nach Anspruch 2, dadurch gekennzeichnet, daß der Bock (5) zur Aufnahme der Rückenlehne (6) des Sitzes eine Durchgangsöffnung für die Stützfüße (9) des vorderen Teils der Sitzfläche (8) besitzt.
